# EUROPÄISCHE PATENTSCHRIFT

(11) **EP 2 153 291 B1**
(45) Veröffentlichungstag und Bekanntmachung des Hinweises auf die Patenterteilung: **07.10.2015**
(21) Anmeldenummer: 08749850.7
(22) Anmeldetag: 29.04.2008
(51) Int. Cl.: G05B 19/418, H04L 29/08

(54) **KOLLABORATIVES AUTOMATIONSSYSTEM SOWIE VERFAHREN ZUR STEUERUNG EINES SOLCHEN**
COLLABORATIVE AUTOMATION SYSTEM AND METHOD FOR THE CONTROL THEREOF
SYSTÈME D'AUTOMATISATION COLLABORATIF ET PROCÉDÉ POUR COMMANDER CELUI-CI

(30) Priorität: 04.05.2007 DE 102007021412; 18.06.2007 DE 102007028530
(43) Veröffentlichungstag der Anmeldung: 17.02.2010
(73) Patentinhaber: SCHNEIDER ELECTRIC AUTOMATION GMBH, 97828 Marktheidenfeld (DE)
(72) Erfinder: COLOMBO, Armado Walter, 63791 Karlstein (DE); BEPPERLING, Axel, 60431 Frankfurt (DE); SCHOOP, Ronald, 63500 Seligenstadt (DE); MILAGAIA, Riu, P-1990-614 Lissabon (PT); MENDES, Marco, P-4990-162 Ponte de Lima (PT)
(74) Vertreter: Stoffregen, Hans-Herbert
(86) Internationale Anmeldenummer: PCT/EP2008/055247
(87) Internationale Veröffentlichungsnummer: WO 2008/135459

(56) Entgegenhaltungen:
- BEPPERLING A ET AL: "A Framework for Development and Implementation of Web service-Based Intelligent Autonomous Mechatronics Components" 1. August 2006 (2006-08-01), INDUSTRIAL INFORMATICS, 2006 IEEE INTERNATIONAL CONFERENCE ON, IEEE, PI, PAGE(S) 341 - 347 , XP031003375 ISBN: 978-0-7803-9700-2 das ganze Dokument
- FRANCOIS JAMMES ET AL: "Service-Oriented Device Communications Using the Device Profile for Web Services" [Online] 2. Dezember 2005 (2005-12-02), INTERNET ARTICLE, PAGE(S) 1 - 8 , XP002509060 Gefunden im Internet: URL:http://middleware05.objectweb.org/WSPr oceedings/MPAC05/a16-jammes.pdf> [gefunden am 2008-12-22] das ganze Dokument

## Beschreibung

Die Erfindung bezieht sich auf ein kollaboratives Automationssystem nach dem Oberbegriff des Anspruchs 1 sowie auf ein Verfahren zur Steuerung eines kollaborativen Automationssystems nach dem Oberbegriff des Anspruchs 6.

Ein kollaboratives Automationssystem obiger Art ist in der Druckschrift A. Bepperling u. a. " A Frame Work for Development and Implementation of Web Service based on Intelligent Autonomous Mechatronik Component", Industrial Informatics, 2006, IEEE Int. Conf. von IEEE PL, 1. Aug. 2006, Seiten 341 - 347, beschrieben. Dabei werden intelligente autonome mechatronische Komponenten vorgeschlagen, in denen Services wie "Agenten-Service", "Geräte-Service", "Anwendungs-Service" sowie "Echtzeit-Anwendungs-Service" implementiert sind. Die Services kommunizieren über ein DPWS (Device Profile for Web-Services) - Protokoll, allerdings ein verschiedenen Kommunikationsplattformen. Insbesondere existierten unabhängig voneinander eine Web-Service-Plattform sowie eine Agenten-Plattform.

In der Druckschrift F. Jammes : : "Service Oriented Device Communications using the Device Profile for Web-Services", Internet Citation, 2. Dezember 2005 wird die Adaption service-orientierter Architekturen auf dem Level der Kommunikationen zwischen eingebetteten Geräten beschrieben, welche ihre Funktionalitäten anbieten. Die Verwendung von "Device Profile for Web-Services für Architekturen" von "intelligenten Geräten" ist ebenfalls beschrieben.

In den letzten Jahren wurden Multi-Agenten-Systeme (MAS) öfters in industriellen Auto-mationsinstallationen verwendet, ohne jedoch eine umfassende Annahme zu erreichen. Gegenwärtig ist deren Verwendung meist begrenzt auf die Planung von Produktionsprozessen. Beispiele für Agentenplattformen und Systeme, die entwickelt wurden durch wissenschaftliche Institute oder industrielle Projekte:
Das Actor-Based Assembly System (ABAS®) behauptet die Ziele der Massen-, schlanken, agilen und flexiblen -produktion nicht nur zu erreichen, sondern sogar zu übertreffen. Es bietet eine hochgenaue kollaborative Automationsplattform, frei von der traditionellen starr gekoppelten Montagesystemstruktur. Es bietet eine hochdynamische, rekonfigurierbare Montagelösung in einer Pilotanwendung, die sich in Tampere, Finnland, befindet.

Das ADACOR (ADAptive holonic COntrol aRchitecture für verteilte, dezentralisierte Produktionsssysteme) ist eine Steuerungsarchitektur, entwickelt und implemontiert am Polytechnic Institute of Bragança, Portugal. Das System zielt darauf ab flexibler Reaktionen auf Störungen des Betriebs bereit zu stellen um Agilität und Flexibilität des Unternehmens zu erhöhen, wenn es in Umgebungen arbeitet, die durch häufiges Auftreten von unerwarteten Störungen gekennzeichnet sind.

P2000+, FactoryBroker^{™}. Parallel zu der Initiative Intelligent Manufacturing System (IMS) Holonic Manufacturing System (HMS-Initiative) wurde die erste industrielle Agenten-kontrollierte Produktionslinie von Schneider Electric Automation entwickelt und erfolgreich in einer Produktionslinie für Kraftfahrzeugs in Betrieb genommen. Diese Linie ist noch immer in Betrieb und beweist das Konzept von rekonfigurierbaren Systemen in der Steuerung von Produktionssystemen. FactoryB-roker^{™} ist ein Beispiel für ein System, das die proprietäre COM/DCOM- (Component Object Model/Distributed Component Object Model) -Technologie für Agenteninteraktionen verwendet.

J.L.M. Lastra: "Reference Mechatronic Architecture for Actor-Based Assembly Systems", Dissertation zur Erreichung des Doktor-Grades, Technische Universität, Tampere, Finnland, 2004.

A.W. Colombo, R. Schoop; R. Neubert: "collaborative (Agent-Based) Factory Automation", Kapitel 109 in: The Industrial Information Technology Handbook, Richard Zurawski (Herausgeber), CRC Press LLC, Boca Raton, USA, November 2004.
- A.W. Colombo; R. Schoop, R. Neubert: "An Agent-based Intelligent Control Platform for Industrial Holonic Manufacturing Systems", IEEE Transaction on Industrial Electronics (IEEE-IES), Februar 2006.
- R. Harrison, A.W. Colombo, A.A. West, S.M. Lee: "Reconfigurable Modular Automation Systems for Automotive Power-Train Manufacture", International Journal of Flexible Manufacturing Systems, Springer-Verlag, London 2007.

Die auf Webservice-Technologie basierende SOA (Service-Orientierte-Architektur) findet mehr und mehr Anwendung in der Welt der Automatisierungstechnologie und wird bereits als Komminikations- und Steuerplattform verwendet. Somit ist Webtechnologie grundsätzlich als Kommunikationsinfrastruktur fur neue Produktionsplattformen in der flexiblen Automation verfügbar. Einer der Gründe, warum agenten-basierte Systeme früher versagt haben, ist, dass sie mit Kommunikationstechnologien implementiert wurden, die eine Re-Konfiguration des Produktionssteuerungssystems blockiert haben, wodurch sie dem gewünschten Autonomiegrundsätz für intelligente Systeme entgegenwirkten.
- Das SIRENA-Projekt war ein europäisches Forschungs- und Weiterentwicklungsprojekt mit dem Ziel, eine Service-Infrastruktur für eingebettete Echtzeit (Realtime) Netzwerkanwendungen zu entwickeln. Das SIRENA-Projekt beabsichtigt die Entwicklung eines Service-orientierten Rahmens (Frameworks) zur Spezilikation und Entwicklung verteilter Anwendungen in verschiedenen unterlagerten Computerumgebungen, einschließlich industrieller Automatisierung, Fahrzeugelektronik, Hausautomatisierung und Telekommunikationssysteme (www.sirena=itea.org).
- I.M.Delamer: "Event-Based Middleware for Reconfigurable Manufacturing Systems: A Semantic Web Services Approach; Dissertation zur Erreichung eines Doktorgrades, Technische Universität, Tampere, Finnland 2006.
- In der DE10 2007 004 654 "Kommunikationsschnittstele zwischen DPWS-basierten Diensten" wird die Verwendung von Webservice-Technologien und des DPWS-Standards zum Erreichen höherer Agilität und Flexibilität im Produktionssystem beschrieben. Ein allgemeines Interface für jedes Gerät und standardisierte Interaktions-muster werden zur Verhandlung zwischen Service-Anbietern und -Nachfragern verwendet.

Es besteht eine stark konzeptionelle Synergie zwischen der SOA und den agentenbasierten Ansätzen. Grundlegende Merkmale der SOA sind die Bereitstellung dynamischer Anzeigen und das Aufrufen von Prozessen in einer lose gekoppelten Weise. Anstatt Services hart miteinander zu verknüpfen vereinfacht SOA die Reorganisation verteilter Systeme. Diese Dynamik und die echte Fähigkeit Strukturen zu rekonfigurieren sind Voraussetzungen um Multi-Agenten-Systeme zu implementierten.

Zur Zeit besteht der de facto Industriestandard für Agentenkömmunikationen aus einer Zusammenstellung von Kommunikationsregeln und Interaktionen, festgelegt durch die Foundation for Intelligent Physical Agents (FIPA). Obwohl Spezifikationen zum Austausch von FIPA-Nachrichten unter XML und HTTP existieren, müssen diese mit dem DPWS (Device Profle for Web Services)-Stack harmonisiert werden, insbesondere WSDL-Nachrichtenbeschreibungen und die Verwendung von WS-Eventing. beispielsweise enthalten DPWS-Spezifikationen eine Überlappung mit der FIPA-Message Spezifikation, welche in Einklang gebraucht werden sollten, z. B. Header-Elemente der WS-Adressing Spezifikation. Zudem kann die Verwendung von DPWS und insbesondere WS-Discovery dazu dienen, eine verteilte Version der-Verzeichnis-Services, wie in der FIPA abstrakten Architektur vorgeschlagen, zu implementierten, wodurch eine ad hoc-Auffindung von Agentien und Services zur Verfügung gestellt wird. Frühere Versuche FIPA und Web-Service zu integrieren wurden in Großsystemen durchgeführt und erfordern Anwendungs-Server und Datenbanken und sind daher zu schwerfällig, um in eingebetteten (embedded) Systemen verwendet zu werden.

Bei Betrachtung der verschiedenen Ebenen des Produktionssystems, wie die Ebenen der multiplen Agenten und der Low-Level-Services, wo ein Agent entweder eng mit einer Ser-vice-Komponente gekoppelt oder sogar mit mehren variabel gekoppelt ist, bleibt die Frage, in welchem Umfang das System der Services durch die Service-Schicht selbst (auto-nom) koordiniert wird, oder beziehungsweise in welchem Umfang das Agentensystem den Arbeitsablauf des Produktionssystems beeinflusst. Z. B unter Berücksichtigung der Facto-ryBroker^{™}-Lösung wird die Steuerung vollständig durch das Agentensystems zur Verfügung gestellt, d.h. die Agenten initiieren die Geräteservices und rufen diese auf. Jede Interaktion betreffend die Koordination zwischen Geräten findet über das Agentensystem statt.

Obigen Verfahren liegt der Nachteil zu Grunde, dass komplexe und simple Kontrollen auf gleicher Ebene stattfinden und miteinander verwoben sind, wodurch der Ansatz stark an eine Technologie gebunden ist.

Davon ausgehend liegt der vorliegenden Erfindung die Aufgabe zu Grunde, ein kollaboratives Automationssystem der eingangs genannten Art derart weiterzubilden, dass eine dynamische Ermittlung und Aufruf von Prozessen in einer lose gekoppelten Produktions- und Steuerungsservice-Infrastruktur erreicht wird.

Die Aufgabe wird erfindungsgemäß u. a. dadurch durch die Merkmale des Anspruchs 1 gelöst.

Der Erfindung liegt die Idee zu Grunde, logische und funktionale Trennung der Schichtendurch die Integration der Agentenfunktionalität in die bereits existierende Service-Plattform zu kompensieren. Vorzugsweise werden Web-Services als Vehicel genutzt, um Agenten auf der gleichen Plattform parallel zum Komponenten-Service zu integrieren.

Der Agenten-Kopf, wie er aus funktionalem Gesichtspunkt an oberste Stelle des Geräte-Services gesfellt wird, erweitert die Service-Plattform und die Gerätefunklionalitäten mit Agentenfunktionalitäten, wie Verhandlung über Service-Aufrufe, pro-aktive Entscheidungsfindung etc. Die funktionalen Interfaces des Geräts bleiben bestehen. Um diese Richtung einzuschlagen, muss der Service-Container mit zusätzlichen Innenschichten erweitertwerden. Intern müssen die Möglichkeiten durch Agenten bei Implementierung von GeräteServices bedacht werden, so dass Verhandlung, Blockierungsvorkehrung etc. einen tatsächlichen Einfluss darauf haben, unter welchen Umständen und Voraussetzungen ein Service verfügbar ist und aufgerufen werden kann.

Gemäß einer bevorzugten Ausführungsform bilden der DPWS-Service, der Agentien-Service und der Geräte-Service zusammen mit der Geräte-Steuerung und ggfs. der Geräte-Mechanik eine kollaborative Automations-Service-Einheit.

Um die verschiedenen Rollen von Agenten und Services innerhalb der Produktion und Steuerung Service-bereitstellender Einheiten hervorzuheben, werden einige Vergleiche gezogen. Der Produktionsautomations- & Steueragent (PACA) baut auf einer SOA-basierten Produktionskomponente auf, in Kombination können diese als kollaborative Automationsserviceeinheit (CASU) identifiziert werden. Betrachtet man PACA vom infrastrukturellen Standpunkt her, handelt es sich grundsätzlich um einen mit High-Order-Fähigkeiten erweiterten Service, wie Pro-Aktivität, Verhandlung, autonome Entscheidungsfindung. Die Einheit CASU hingegen, ohne Berücksichtigung des SIRENA Anteils, kann als PACA betrachtet werden, die vom funktionalen Blickpunkt als Agent in Factory Broker bekannt ist.

Des Weiteren ist vorgesehen, dass in der Koordinations-Einheit eine Konfiguration und Layout eines Transport- und Produktionsdienstes implementiert ist.

Die Modellierung des Produktionssystems und die Koordination können auf Basis geeigneter Modellierungssprachen, wie beispielsweise BPEL4WS, PN-Derivate, SFC-Derivate oder Flussdiagrammen erfolgen.

Gemäß einer weiteren bevorzugten Ausführungsform kann die Koordinations-Einheit extern, zentral, integriert und/oder verteilt implementiert angeordnet sein.

Ferner weist die Koordinations-Einheit eine Support-Schnittstelle zur Ankopplung eines Agentensystems auf, welches die Auswahl von Diensten und das optimale Rooting von Produkten unterstützt.

Dabei können die Geräte-Agenten lokal auf der kollaborativen Automations-Service-Einheit oder als separate Komponenten als Produkt-Agent implementiert sein.

Ferner bezieht sich die Erfindung auf Verfahren zu Steuerung eines kollaborativen Automationssystem umfassend verteilte Produktions- und Steuerungsservice bereitstellende Geräte wie Transport- und Bearbeitungsmaschinen mit zugeordneten Geräte-Agenten, Produkte mit zugeordneten Produkt-Agenten sowie eine eine Kommunikationsplattform bereitstellende Koordinations-Einheit. Die Aufgabe wird durch Merkmale des Anspruchs 7 gelöst.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1a: ein Multi-Agenten-System und/oder Service-Beziehungen in Cross-Mapping
- Fig. 1b: ein Mulit-Agentensystem und/oder Service-Beziehungen in 1:1-Mapping
- Fig. 1c: ein Multi-Agentensystem und/oder Service-Beziehungen in integrierter Weise bei Verwendung derselben Infrastruktur
- Fig. 2a: eine kollaborative Automations-Service-Einheit, wobei der physikalische Agent als eine separate Agentenschicht mit einer separaten Kommunikationsplattform implementiert ist
- Fig. 2b: eine kollaborative Automations-Service-Einheit, wobei der physikalische Agent als integrierter Service mit einziger Kommunikationsplattform implementiert ist
- Fig. 3: die interne Struktur einer kollaborativen Automations-Service-Einheit
- Fig. 4: ein Schema einer komplexen Konstellation mit Verschiebetischen, Werkstücken und Maschinen
- Fig. 5: eine schematische Darstellung der Konfliktlösung und Orchestrierung von CASU-Komponenten
- Fig. 6: eine schematische Darstellung des Austauschs von Operationen zwischen CASU-Komponenten sowie vereinfachtes sequentielles Flussdiagramm
- Fig. 7: eine Darstellung von Interaktionsmechanismen zwischen CASU-Komponenten
- Fig. 8: eine schematische Darstellung von Interaktionsmechanismen zwischen CASU-Komponenten unter Verwendung von DPWS-Merkmalen zur Agenten-Interaktion
- Fig. 9: eine schematische Darstellung einer Kommunikation im Anschluss an Hallo-Mitteilung oder LOOK-up
- Fig. 10: eine schematische Darstellung von Kommunikationsmechanismen zwischen CASU-Komponenten auf der CASU-Verschiebetischseite
- Fig. 11: eine schematische Darstellung von Kommunikationsmechanismen zwischen CASU-Komponenten auf der Werkstückseite.

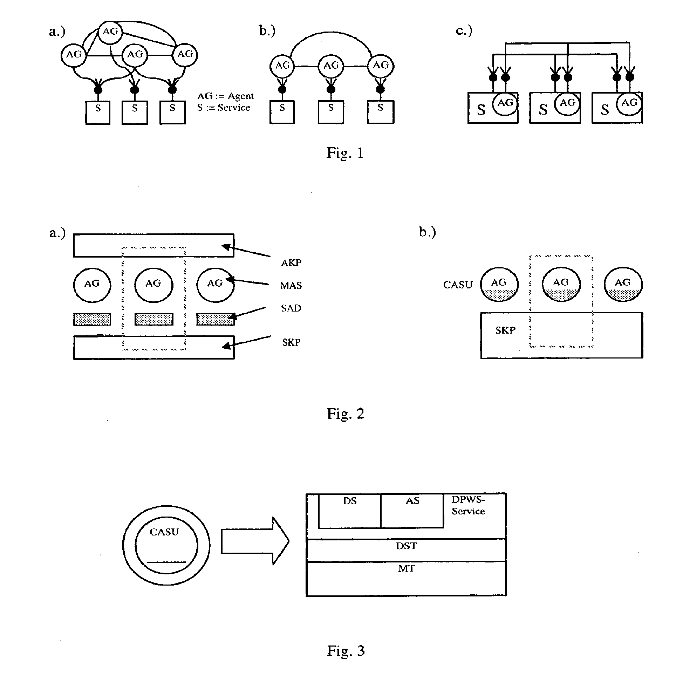

In den Fig. 1a bis lc sind Multi-Agenten-Systeme/Service-Beziehungen dargestellt. Die Fig. 1a zeigt dabei ein Cross-Mapping, wobei mehrere Agenten AG untereinander sowie mit einem oder mehreren Services S in Beziehung stehen. Fig. 1b zeigt ein 1:1-Mapping, wobei die Agenten AG miteinander kommunizieren und Services S aufrufen können. Bei dem in Fig. 1c dargestellten Multi-Agenten-System sind Agenten AG in die Services S integriert, bei Verwendung derselben Infrastruktur.

Fig. 2a zeigt eine Struktur, wobei die Agenten AG in einem Multi-Agentensystem MAS angeordnet sind, welche über eine Agenten-Kommunikationsplattform AKP wie FIPA über DCOM kommunizieren. Unabhängig davon existieren Service-aktivierbare Geräte SAD, welche über eine Service-Kommunikationsplattform SKP kommunizieren, wie beispielsweise mittels SOAP- und DPWS-Spezifikation verwendende Web-Technologien.

Im Gegensatz dazu ist in Fig. 2b der Agent AG und das Service-aktivierbare Gerät SAG als kollaborative Automations-Service-Einheit CASU dargestellt, welche über eine einzige Kommunikationsplattform SKP kommunizieren.

Fig. 3 zeigt interne Strukturen einer physischen CASU-Komponente. Diese umfasst die Mechatronik MT, die Gerätesteuerung DST sowie die DPWS-Services mit integriertem Agent-Service AS sowie Device-Service DS.

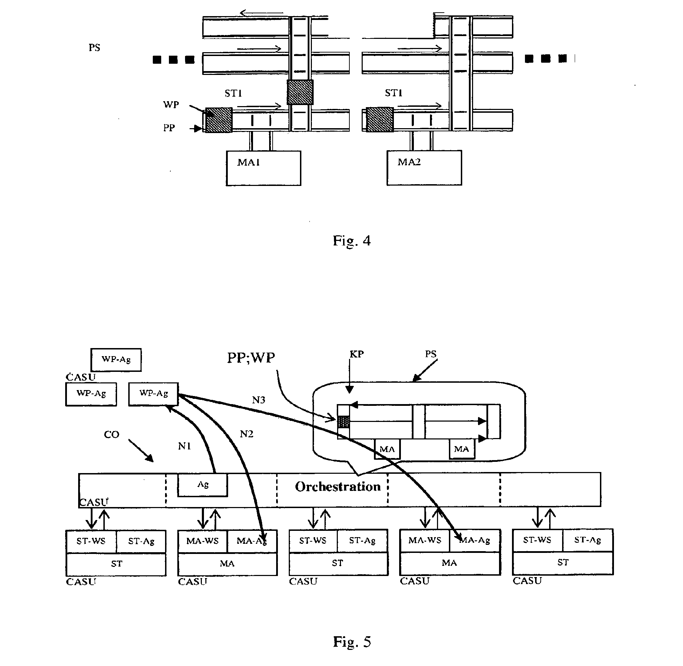

Fig. 4 zeigt eine Testimplementation eines flexiblen Produktionssystems PS, bestehend aus Produktionsmaschinen MA1, MA2, einem modularen Transportsystem mit Schiebetischen ST1, ST2 und auf dem Transportsystem verschiebbare Produktpaletten PP zum Transport von Produkten bzw. Werkstücken WP.

Fig. 5 zeigt eine schematische Darstellung von CASU-Komponenten zu dem in Fig. 4 dargestellten Produktionssystem PS.

In einer zentralen Instanz CO erfolgt die Orchestration der mit der Instanz CO gekoppelten CASU-Komponenten. In der Instanz CO ist das interne Modell des Produktionssystems PS implementiert.

Die Hardware-/Software-Einheiten wie Schiebetisch, Maschine sowie Palette/Werkstück sind jeweils durch CASU-Komponenten dargestellt, die die in Fig. 3 dargestellte Struktur aufweisen. Die CASU-Komponenten, welche Geräte-Services ST-WS, MA-WS sowie die zugehörigen Agenten-Services ST-AG sowie MA-AG. Ferner sind Produktagenten WP-AG ebenfalls als CASU-Komponenten dargestellt, die allerdings ein Geräte-Service DS nicht enthalten.

Wie in Fig. 5 dargestellt, wird die Steuerung und Koordination von einer zentralisiert oder verteilt implementierten Instanz CO z. B. mittels der Methode der Orchestrierung durchgeführt. Diese Kontrollinstanz CO "kennt" die Konfiguration (Layout) des flexiblen Produktionssystems PS, d. h. Konfiguration und Layout der Transport- und Produktionsdienste sowie den Zustand der Produktion zur Laufzeit. Die Modellierung des Produktionssystems PS und die Koordination erfolgt auf Basis geeigneter Modellierungssprachen wie BPEL4WS, PN-Derivate, SFC-Derivate, Flussdiagramme. Physikalische Zwänge wie beispielsweise das Zeitverhalten und die konkurrierenden Ressourcenzugriffe und Reaktionen auf abnormales oder unvorhersehbares Verhalten sind (oder müssen) in dem Prozessmodell respektiert werden, was recht komplexe Ablaufmodelle erzeugen kann.

Die Instanz CO bzw. der Orchestrator (extern, zentral, integriert und/oder verteilt implementiert) koordiniert das Produktionssystem PS auf Basis eines Verhaltensmodells, welches das Layout und den aktuellen Zustand der Anlage widerspiegelt. Ein Agentensystem, umfassend Werkstückagenten WP-AG, Schiebetisch-Agenten ST-AG und MaschinenAgenten MA-AG, welches die Auswahl von Services und das optimale Rooting von Produkten WP unterstützen soll, ist logisch außerhalb der Orchestrierung implementiert und durch eine Support-Schnittstelle SI mit der Orchestrierung verbunden. Konflikte, welche zur Laufzeit auf der Orchestriemnasebene auftauchen, werden über die Schnittstelle SI an das Agentensystem kommuniziert.

Erreicht beispielsweise ein Palette PP mit einem Werkstück WP mit unbekanntem Ziel einen Knotenpunkt KP, entsteht ein Konflikt: Durch welche Maschine MA soll der nächste Arbeitsschritt ausgeführt werden? In diesem Fall wird zunächst das Produkt WP auf der Palette PP durch einen Produktagenten WP-AG identifiziert, der die nächsten Arbeitsschritte lädt, dargestellt durch Pfeil N1 (Konfliktsituation anzeigen und dessen Lösung anfordern). Anschließend bieten mehrere Maschinen MA einen nächsten Arbeitsschritt als Dienst an. Die Ausschreibung mit Angebot und Auswahl der Maschine MA erfolgt durch Produkt-Agent WP-AG und Maschinen-Agent MA-AG, dargestellt durch Pfeile N2, N3 (Verhandlung durch Agenten). Die Maschinenagenten MA-AG und Schiebetisch-Agenten ST-AG können lokal auf der CASU-Komponente integriert sein bzw. als separate Komponente beispielsweise für einen Produktagenten WP-AG implementiert sein.

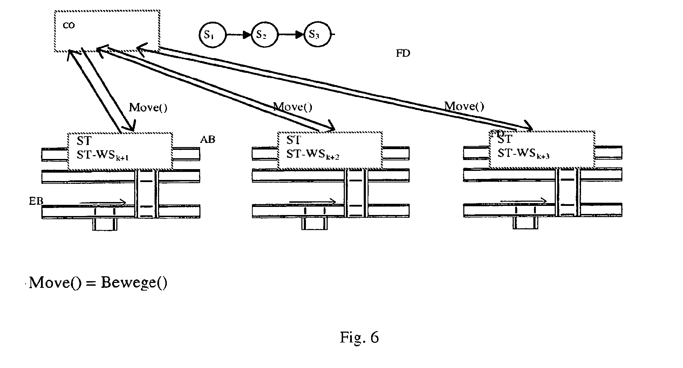

Verschiebetisch-Komponente als Service gemäß Fig. 6. Der Schiebetisch ST wird als ein Service ST-WS betrachtet, welcher elementare Operationen zur Verfügung stellt, welche Aktionen, wie z. B. "bewegte Palette PP von einem bestimmten Eingangsband EP zu einem bestimmten Ausgangsband" Ab- oder Ausgabe von Ereignissen zur Bekanntgabe momentaner Zustände wie "eine Palette PP. an einem bestimmten Eingangsband EB ist bereit" erlauben. Der Bereich der Operationen ist begrenzt auf die lokale Komponente. Die Service-Operationen und Ereignisse sind atomar genug, um eine Kombination von mehreren Verschiebetischen ST zu einem System zu erlauben, welches mittels des Koordinators CO koordiniert und kontrolliert werden kann, basierend auf dem vorhandenen Satz von Operationen. Es sind keine weiteren Interfaces vorhanden.

In diesem Zustand wird die Steuerung und Koordination von der zentralisierten Instanz CO, z. B. mittels der Methode der Orchestrierung gemäß Fig. 5 bereitgestellt. Die zentralisierte Instanz "kennt" sozusagen die Topologie des Transportsystems, "kennt" die Verteilung der Paletten PP und Produkte WP. Die Koordination erfolgt durch eine Art globaler Verfahrensbeschreibung, z. B. BPEL4WS, PN-Derivate, SFC-Derivate, Flussdiagramme oder jede geeignete bessere Darstellung. Physikalische Zwänge wie beispielsweise das Zeitverhalten und die konkurrierende Ressourcenzugriffe und Reaktionen auf abnormales oder unvorhergesehenes Verhalten sind (oder müssen) in dem Prozessmodell respektiert werden, was recht komplexe Abläufe erzeugen kann.

Ein Satz von detaillierten Operationen des Verschiebetisch-Services kann z. B. wie folgt lauten:
- *Operation* Move (pellet_{id}, Inₙᵤₘ, outₙᵤₘ): Diese Operation erfragt den Transport einer Palette PP von einem Eingangsförderband EB zu einem Ausgangsförderband AB. Mehrere asynchrone Anworttypen sind möglich: Registered, Rejected, Started, Done, Cancel, etc. Eine untergeordnete Operation um eine Verschiebeoperation einer Palette PP zu einem Ausgang des Tisches ST anzufragen, wenn diese an einem bestimmten Eingangsort ankommt. Die Operation Move() könnte eine zusammengesetzte (sequentiell) Operation sein aus: Move (p_{id}, inₙᵤₘ, outₙᵤₘ): = FetchIn(p_{id}, inₙᵤₘ) ⊕ Move-Out(p_{id}, outₙᵤₘ)
- *event* InBufferReceived (pallet_{id}, inₙᵤₘ)
   Dieses Ereignis wird gesendet, wenn der Verschiebetisch ST eine Palette PP an einem seiner Eingangsförderbänder erkennt. Dieses Ereignis kann eine Move()-Operation starten.
- *event* outBufferReceived (pallet_{id}, out_{id})
   Ein Ereignis nach einem Move() wurde ausgeführt und die Palette wurde auf den Förderband- oder Ausgangs-Port freigegeben. Der Empfänger des Ereignisses kann die nächsten Move() Operationen ausgeben.
- *event* OutBufferCriticalState (out_{id})
   Ein Verschiebetisch ST ist in der Lage, den Status seines lokalen Förderbandes durch entsprechend platzierte Sensoren zu überwachen. Ein Ausgangsförderband kann Sensoren aufweisen, die detektieren, ob zumindest n-Paletten zu diesem bestimmten Band verschoben werden können. Wenn ein kritischer Pufferzustand erreicht wird, wird ein Ereignis gesendet.
- *event* InBufferTimeout (pallet_{id}, inₙᵤₘ)
   Nachdem eine Palette PP an einem Eingang angekommen ist, wird ein Ereignis ausgesendet, wie zuvor beschrieben. Eine Move() Operation wird die Palette PP zu einem Ausgang weiterbefördern oder nach einem vorgegebenen Timeout wird ein Ereignis ausgegeben, der das Problem anzeigt. Diese Situation kann vorkommen, wenn keine Move() Operation anhängig ist, oder wenn unerwartete Paletten ankommen. Um Behinderungen zu vermeiden, können die Verschiebetische ST ebenfalls autonom solche Teile einem vorgegebenen Ausgabeband übergeben.

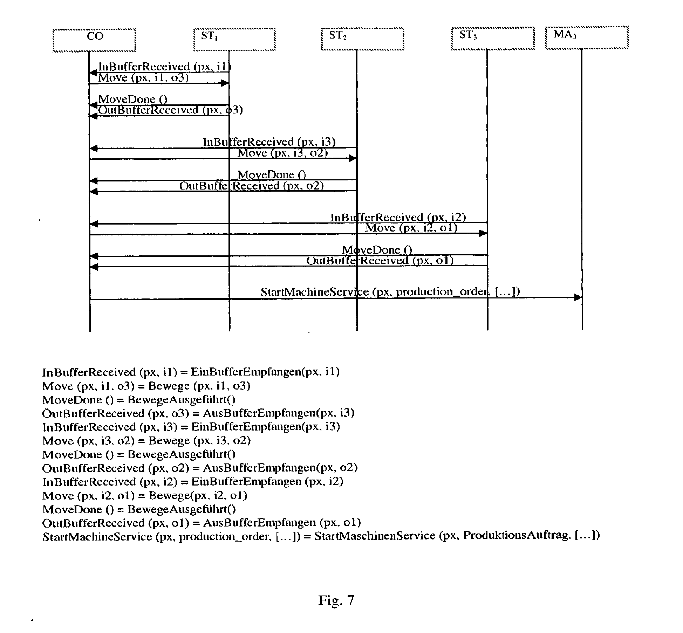

Ein Beispiel einer Kommunikation zwischen dem Koordinator CO und Verschiebetischen ST1-ST3 ist in Fig. 7 dargestellt. Der Koordinator CO managt den Prozessablauf zum Transport der Palette PX von dem Verschiebetisch ST1 zu dem Verschiebetisch ST3 und verwendet die dem Verschiebetisch ST3 zugeordnete Maschine M3. Die Palette folgt dem Pfad: Verschiebetisch ST1 (in1 → out3) → Verschiebetisch ST2 → (in3 →out2) → Verschiebetisch ST3 (in2 → out1) und ist fertig, um von Maschine M3 bearbeitet zu werden. Ein vereinfachtes sequentielles Flussdiagramm FD, das die Serviceaufrufe zum Transport einer Palette PP von Verschiebetisch ST1 und Verschiebetisch ST3 und den Start der Operation der Maschine M3 zeigt, ist in Fig. 6 dargestellt.

Verschiebetisch-Service erweitert zu CASU (= Service + PACA) Die Erweiterung der Verschiebetisch-Komponente mit Agentenfunktionalität wird hier behandelt. In den vorhergehenden Paragraphen wurde beschrieben, wie der Koordinator CO verwendet werden kann, damit der Prozess des Transportes einer Palette PP von einem Punkt zu einem anderen Punkt gemanagt werden kann.

Ein entscheidendes Konzept von SOA ist die lose Kopplung von Services und in der Tat werden Verschiebetische ST, Paletten PP und Maschinen M als natürlich lose gekoppelte Services WS betrachtet und sie werden zur gleichen Zeit von verschiedenen Auftraggebern bzw. Anrufern benutzt. Darüberhinaus kann das System ebenfalls mit redundanten Ressourcen zu verhandeln haben (z. B. verschiedene Maschinen, die denselben Satz von Operationen bereitstellen). Anhand der Abbildung des Prozessablaufdiagramms ist es schwierig, eine bestimmte Abbildung von Service-Anfragen an physikalische Ressourcen zur Zeit des Entwurfs zu finden. Der Prozess wird in abstrakten, versetzten, unabhängigen Schritten geführt und enthält nur die notwendigen Typen von Services. Die Ressource muss zur Echtzeit (runtime) bestimmt werden.

Das Verfahren zum Auffinden eines Service wird nicht unmittelbar ausgeführt, wie von Anfrage-Antwort-Mustern bekannt, wobei eine Operation direkt angesprochen wird. Der Sercive-Provider wird als eine gemeinsam genutzte Ressource angesehen, somit führt er Service-Anfragen und die Service-Bereitstellung durch und führt die Operation aus.

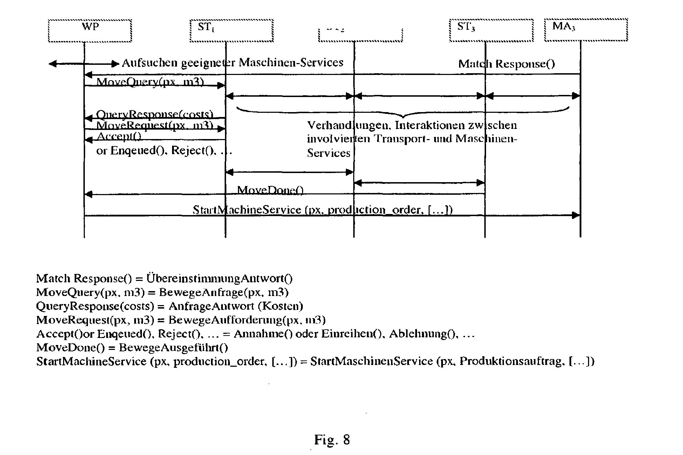

Unter Bezugnahme auf die Abbildung des Prozessablaufdiagramms soll ein weiterer Aspekt der Bildung von Services höherer Ordnung anhand der Fig. 8 dargestellt werden. Zuvor beschreibt das Prozessdiagramm, wie eine Palette PP von einem Ort zu einem anderen transportiert wird indem die Services WS der Verschiebetische in die entsprechende Reihenfolge gebracht werden. Jetzt werden die Verschiebetisch-Services ST-WS aufgrund ihnen innewohnender Fähigkeiten der Kollaboration zusammengesetzt, so dass die Service-Anfrage (Werkstück) den zusammengesetzten Service benutzt. Anstelle von move(1,2) + move(2,3) heißt die Anfrage move(1,3) und die zwei move-Services müssen kooperieren, um den Service höherer Ordnung zu erfüllen.

### Inbetriebnahme

Mit DPWS-Erkennung ist es unnötig, ein (CASU-) Gerät vor einem anderen zu starten. Startet der Verschiebetisch ST als Erster wird dies vom (CASU-) Werkstück entdeckt, wenn dieses startet, startet das (CASU-)Werkstück als erstes, kündigt sich der (CASU-)Verschiebetisch an, wenn dieser startet. Ihre Namen sollten in dem Namens-Teil der Identifikation eingetragen sein. Wird ein (CASU-)Gerät erkannt, werden dessen Metadaten, Services und Service-Metadaten abgefragt, so dass auf dieses (CASU-)Gerät zugegriffen werden kann.

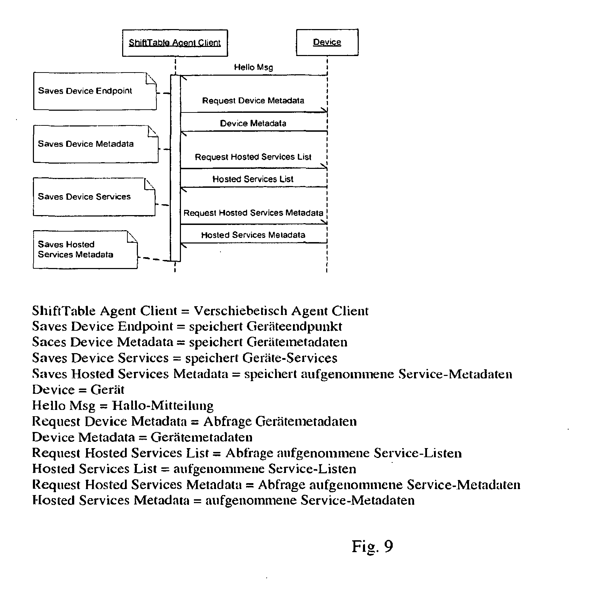

Wann immer ein neues (CASU-) Gerät im Netzwerk erscheint, wird es eine Hallo-Nachricht an alle senden (multicast) und alle anderen (CASU-) Geräte werden diese neuen Gerätedaten, Services und Service-Metadaten abfragen, wie in FIg. 9 dargestellt.

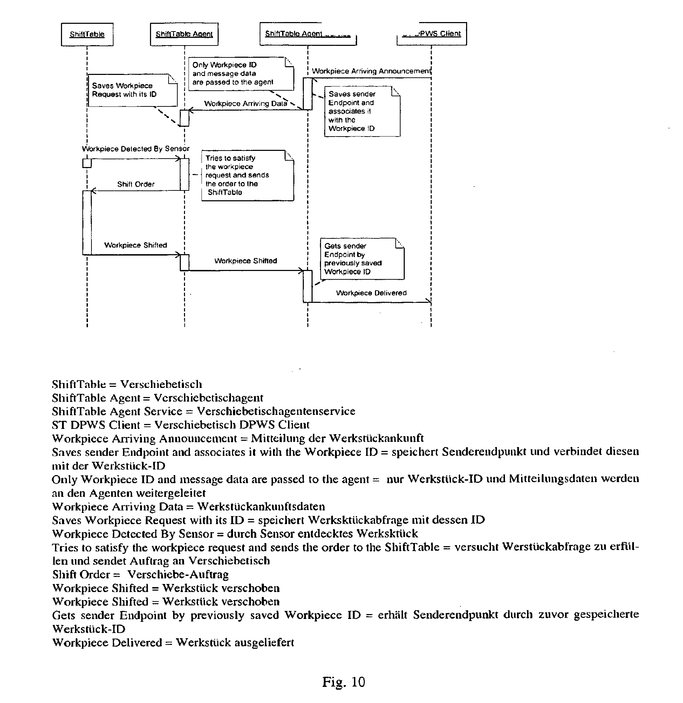

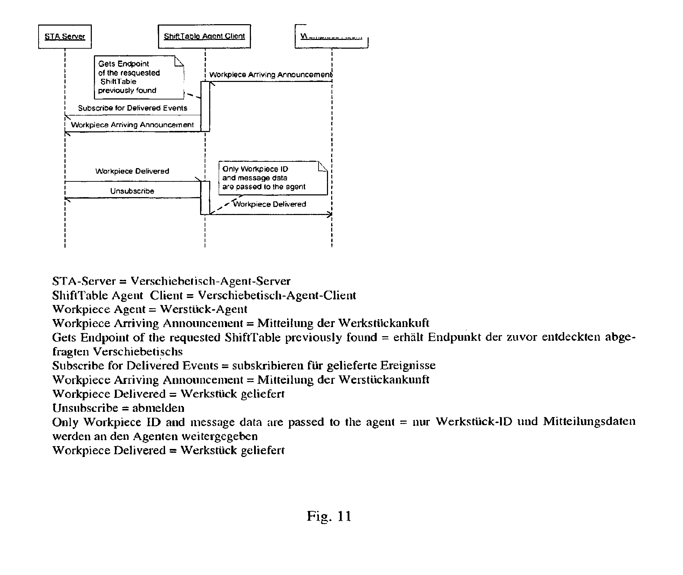

Ein Einfacher Fall ist in Fig. 10 und 11 dargestellt, wobei Fig. 10 die CASU-Verschiebetisch-Seite und Fig. 11 die Werkstück-Seite darstellt. Das (CASU-) Werkstück WP1 kommt auf dem unteren Förderer an und möchte zu dem oberen transportiert werden. Der Werkstückagent WP-AG meldet sich selbst an dem zuvor gefundenen (CASU-) Verschiebetisch ST1 an und verlangt, von dem unteren Förderer zu dem oberen verschoben zu werden. Diese Mitteilung wird der DPWS-Kommunikationsschicht zugeleitet, die eine Tabelle hat, die den gegebenen Verschiebetischnamen ST1 in den eigentlichen registrierten Endpunkt übersetzt, falls der Verschiebetisch entdeckt wurde. Mit diesem Endpunkt ist die Nachricht nun bereit, um zu dem Verschiebetischagenten ST-AG gesandt zu werden. Die Nachricht wird gesendet und die Verschiebetischagenten-DPWS-Schicht empfängt die Nachricht und übersetzt den Senderendpunkt in einen Namen WP1, der vom anderen (CASU-) Agenten verstanden werden kann und der zuvor dem (CASU-) Verschiebetischagenten ST-AG bekannt gemacht worden ist. Der (CASU-) Agent empfängt schließlich die Werkstückankündigung vom Werkstück WP1.

Erreicht das Werkstück WP den Eingang des (CASU-) Verschiebetischs ST, kommuniziert die Hardware dies dem (CASU-)Agenten, der dann das Kommando gibt, wohin das Werkstück verschoben werden soll. Die Hardware verschiebt das Werkstück WP und teilt dem (CASU-)Agenten das Ende des Ablaufs mit. Sodann fordert der (CASU-)Agent die DPWS-Kommunikationsschicht auf, an das Werkstück WP1 ein Ereignis zu schicken betreffend die Beendigung der gestellten Aufgabe. Das DPWS erhält den gespeicherten Endpunkt von der gegebenen ID und sendet ein "Werkstück abgeliefert"-Ereignis an die Werkstückagent-DPWS-Schicht.

Nach Übersetzung des Endpunkts für ein CASU-agentenerkennbares ID gibt die DPWS-Schicht diese Nachricht an den (CASU-) Agenten weiter, der sodann über die nächste Aktion entscheidet.

### Verfahrensdetails

Die DPWS-Schicht muss bezüglich der Anmelderichtlinien konfiguriert werden. Um Ereignisse zu erhalten, muss sich der Client für dieses Ereignis anmelden. Man kann sich immer für einen Typ von Ereignissen jedes Verschiebetisches anmelden, wobei die Anmeldung erneuert werden kann, wenn sie abläuft oder beim Durchführen einer Abfrage oder einer Abmeldung, wenn die Mitteilung eintrifft. Die internen Verfahren der DPWS-Schicht müssen definiert werden, um das Netzwerk oder die Entwicklungszeit zu optimieren.

### Der Server

Das Service-Provider-DPWS-Inteiface ist einfach und verlangt für den korrekten Ablauf nur die Konfiguration des Servers und Verbindung zu dem (CASU-) Agenten.

### Der Client

Das Client-DPWS-Interface erlaubt es dem Agenten Services aufzurufen und Ereignisse zu empfangen. Das Interface meldet sich für Ereignisse an, verwaltet Anmeldungen, so dass diese nicht ablaufen oder der Agent keine unnötigen Nachrichten erhält, indem die Anmeldung storniert wird, verwaltet das Eintreffen und Verlassen von Geräten in das Netzwerk und teilt diese dem Agenten mit.

### Architektur

Ein Gerät hat eine Anzahl von Blöcken. Es setzt sich zusammen aus einem Agenten, einem Server, einen oder mehreren Clients und eventuell Hardware. Jedes Gerät hat seine Services, die vom Server verwaltet werden und in Abhängigkeit von der Implementierung eines oder mehrerer Clients. Sie kann nur einen Client aufweisen, der fähig ist, mit jedem Gerätetyp zu kommunizieren, oder mehrere Clients, meistens entsprechend der Anzahl der Gerätetypen, mit denen der Agent kommunizieren möchte. Wird ein Gerät gestartet, sendet der Server eine Hallo-Nachlicht an alle Geräte des Netzwerks und jeder Client startet eine Vorschau, um andere Geräte zu entdecken.

## Patentansprüche

1. Kollaboratives Automationssystem (PS) umfassend verteilte Produktions- und Steuerungsservice bereitstellende Geräte (D) wie Transport- und Bearbeitungsmaschinen (M) mit zugeordneten Geräte-Agenten (ST-AG, MA-AG), sowie Produkte mit zugeordneten Produkt-Agenten (WP-AG), wobei den Produktions- und Steuerungsservice bereitstellenden Geräten (ST, MA, WP) ein DPWS (Device Profile for Web-Services-Protocol) - basierter Web-Service (ST-WS; MA-WS) zugordnet ist, wobei Gerätefunktionen als Geräte-Service und Agentenfunktionen beschreibende Geräte-Agenten als Agenten-Service in den DPWS-basierten Web-Service implementiert sind,
**dadurch gekennzeichnet,**
**dass** das Automationssystem (PS) eine eine Kommunikations-Plattform (SKP) bereitstellende Koordinations-Einheit (CO) aufweist, wobei die Kommunikations-Plattform (SKP) als einheitliche, DPWS (Device Profile for Web-Services)-orientierte Plattform mit Service-orientierter Architektur ausgebildet ist, dass in der Koordinations-Einheit (CO) eine Konfiguration (Layout) des flexiblen Produktions-Systems sowie der Zustand der Produktion zur Laufzeit implementiert ist und dass die Koordinations-Einheit (CO) eine Support-Schnittstelle zur Ankopplung eines die Auswahl von Services und das optimale Routing von Produkten unterstützenden Agentensystems aufweist.

2. Kollaboratives Automationssystem nach Anspruch 1,
**dadurch gekennzeichnet,**
**dass** DPWS-Service, Agenten-Service, Geräte-Service zusammen mit der Geräte-Steuerung und ggfs. der Geräte-Mechanik eine kollaborative Automations-Service-Einheit (CASU) bilden.

3. Kollaboratives Automationssystem nach Anspruch 1 oder 2,
**dadurch gekennzeichnet,**
**dass** die Modellierung des Produktionssystems und die Koordination auf Basis geeigneter Modellierungssprachen wie beispielsweise BPEL4WS, PN-Derivate, SFC-Derivate oder Flussdiagramme erfolgt.

4. Kollaboratives Automationssystem nach zumindest einem der vorhergehenden Ansprüche,
**dadurch gekennzeichnet,**
**dass** die Koordinationseinheit (CO) extern, zentral, integriert und/oder verteilt implementiert angeordnet ist.

5. Kollaboratives Automationssystem nach zumindest einem der vorhergehenden Ansprüche,
**dadurch gekennzeichnet,**
**dass** die Geräte-Agenten (ST-AG; MA-AG; WP-AG) lokal auf der kollaborativen Automations-Serviceeinheit (CASU) oder als separate Komponenten als Produkt-Agent (WP-AG) implementiert sind.

6. Verfahren zur Steuerung eines kollaborativen Automationssystems (PS) umfassend verteilte Produktions- und Steuerungsservices bereitstellende Geräte (D) wie Transport- und Bearbeitungsmaschinen (ST; PP; MA) mit zugeordneten Geräte-Agenten (ST-AG, MA-AG), sowie Produkte mit zugeordneten Produkt-Agenten (WP-AG), wobei den Produktions- und Steuerungsservice bereitstellenden Geräten (ST, MA, WP) ein DPWS (Device Profile for Web-Services-Protocol) - basierter Web-Service (ST-WS; MA-WS) zugeordnet ist, wobei Gerätefunktionen als Geräte-Service und Agentenfunktionen beschreibende Geräte-Agenten als Agenten-Service in den DPWS-basierten Web-Service implementiert sind,
**dadurch gekennzeichnet,**
**dass** die Produktions- und Steuerungsservice bereitstellenden Geräte (ST, MA, WP) über eine einzige von einer Koordinations-Einheit bereitgestellte Kommunikations-Plattform kommunizieren, dass die Kommunikations-Plattform (SKP) als einheitliche, DPWS (Device Profile for Web-Services)-orientierte Plattform mit Service-orientiert Architektur betrieben wird, dass in der Koordinations-Einheit (CO) eine Konfiguration (Layout) des flexiblen Produktions-Systems (PS) sowie der Zustand der Produktion zur Laufzeit implementiert wird, und dass eine Ankopplung eines die Auswahl von Services und das optimale Routing von Produkten unterstützenden Agentensystems über eine in der Koordinations-Einheit (CO) implementierte Support-Schnittstelle erfolgt.

7. Verfahren nach Anspruch 6,
**dadurch gekennzeichnet,**
**dass** die Modellierung des Produktionssystems und die Koordination auf Basis geeigneter Modellierungssprachen wie beispielsweise BPEL4WS, PN-Derivate, SFC-Derivate oder Flussdiagramme erfolgt.

## Claims

1. A collaborative automation system (PS) encompassing production and control service providing distributed devices (D), such as transport and processing machines (M) with associated device-agents (ST-AG, MA-AG) as well as products with associated product-agents (WP-AG), wherein the devices (ST, MA, WP) that provide production and control service are associated with a DPWS (Device Profile for Web-Services-Protocol)-based web service (ST-WS; MA-WS);
wherein device functions are implemented as device service, and device agents, that describe agent functions, are implemented as agent service in the DPWS-based web service,
**characterized in**
**that** the automation system (PS) features a coordination unit (CO) that provides a communication platform (SKP), wherein the communication platform (SKP) is operated as a uniform, DPWS (Device Profile for Web-Services)-oriented platform with service-oriented architecture, that within the coordination unit (CO) a configuration (layout) of the flexible product system as well as the state of the production at run time is implemented, and that the coordination unit (CO) comprises a support interface for connecting with an agent system that supports the selection of services and the optimal routing of products.

2. The collaborative automation system according to claim 1,
**characterized in**
**that** DPWS-service, agent service, and device service together with the device control and, if applicable, device mechanics form a collaborative automation-service-unit (CASU).

3. The collaborative automation system according to claim 1 or 2,
**characterized in**
**that** the modeling of the product system and the coordination takes place on the basis of suitable modeling languages, such as for instance BPEL4WS, PN-Derivatives, SFC-Derivatives, or flow charts.

4. The collaborative automation system according to at least one of the previous claims,
**characterized in**
**that** the coordination unit (CO) is arranged in an external, central, integrated and/or distributed implementation.

5. The collaborative automation system according to at least one of the previous claims,
**characterized in**
**that** the device agents (ST-AG; MA-AG; WP-AG) are implemented locally on the collaborative automation service unit (CASU) or as separate components as a product agent (WP-AG).

6. A process for the control of a collaborative automation system (PS) encompassing production and control service providing distributed devices (D), such as transport and processing machines (ST; PP; MA) with associated device-agents (ST-AG, MA-AG) as well as products with associated product agents (WP-AG), wherein the devices (ST, MA, WP) that provide production and control service are associated with a DPWS (Device Profile for Web-Services-Protocol)-based web service (ST-WS; MA-WS);
wherein device functions are implemented as device service, and device agents, that describe agent functions, are implemented as agent service in the DPWS-based web service;
**characterized in**
**that** the devices (ST, MA, WP) that provide production and control service communicate by means of a single communication platform provided by a coordination unit, that the communication platform (SKP) is operated as a uniform, DPWS (Device Profile for Web-Services)-oriented platform with service-oriented architecture, and that within the coordination unit (CO) a configuration (layout) of the flexible product system (PS) as well as the state of the production at run time is implemented, and that the coordination unit (CO) features a support interface for connecting with an agent system that supports the selection of services and the optimal routing of products.

7. The process according to claim 6,
**characterized in**
**that** the modeling of the production systems and coordination can be accomplished on the basis of appropriate modeling languages, such as BPEL4WS, PN-Derivatives, SFC-Derivatives, or flow charts.

## Revendications

1. Système d'automatisme collaboratif (PS) comprenant des appareils (D) qui fournissent des services de production et de commande distribués tels que des machines de transport et d'usinage (M) auxquels sont associés des agents d'appareil (ST-AG, MA-AG), ainsi que des produits auxquels sont associés des agents de produit (WP-AG), sachant qu'aux appareils (ST, MA, WP) fournissant des services de production et de commande est associé un service Web (ST-WS ; MA-WS) sur base DPWS (Device Profile for Web-Services-Protocol), que les fonctions des appareils sont implémentées dans le service Web sur base DPWS sous la forme de services d'appareil et que les agents d'appareil décrivant les fonctions d'agent sont implémentés dans le service Web sur base DPWS sous la forme de services d'agent,
**caractérisé en ce**
**que** le système d'automatisme (PS) présente une unité de coordination (CO) fournissant une plateforme de communication (SKP), sachant que la plateforme de communication (SKP) est formée en tant que plateforme uniforme orientée DPWS (Device Profile for Web-Services) avec une architecture orientée services, que dans l'unité de coordination (CO) sont implémentés une configuration (topologie) du système de production flexible ainsi que l'état de la production au moment de l'exécution, et que l'unité de coordination (CO) présente une interface de support destinée à coupler un système d'agents soutenant la sélection de services et l'acheminement optimal de produits.

2. Système d'automatisme collaboratif selon la revendication 1,
**caractérisé en ce**
**que** le service DPWS, les services d'agent, les services d'appareil forment, avec la commande d'appareils et le cas échéant le mécanisme d'appareils, une Collaborative Automation Service Unit (CASU) ou " unité collaborative de services d'automatisme".

3. Système d'automatisme collaboratif selon la revendication 1 ou 2,
**caractérisé en ce**
**que** la modélisation du système de productions et la coordination s'effectuent sur la base de langages de modélisation appropriés, tels que par exemple BPEL4WS, dérivés de PN, dérivés de SFC ou organigrammes.

4. Système d'automatisme collaboratif selon au moins une des revendications précédentes,
**caractérisé en ce**
**que** l'unité de coordination (CO) est implémentée selon une configuration externe, centralisée, intégrée et/ou répartie.

5. Système d'automatisme collaboratif selon au moins une des revendications précédentes,
**caractérisé en ce**
**que** les agents d'appareil (ST-AG ; MA-AG ; WP-AG) sont implémentés localement sur l'unité collaborative de services d'automatisme (CASU) ou en tant que composants distincts sous forme d'agent de produit (WP-AG).

6. Procédé destiné à commander un système d'automatisme collaboratif (PS), comprenant des appareils (D) qui fournissent des services de production et de commande distribués tels que des machines de transport et d'usinage (ST ; PP ; MA) auxquels sont associés des agents d'appareil (ST-AG, MA-AG), ainsi que des produits auxquels sont associés des agents de produit (WP-AG), sachant qu'aux appareils (ST, MA, WP) fournissant des services de production et de commande est associé un service Web (ST-WS ; MA-WS) sur base DPWS (Device Profile for Web-Services-Protocol), que les fonctions des appareils sont implémentées dans le service Web sur base DPWS sous la forme de services d'appareil et que les agents d'appareil décrivant les fonctions d'agent sont implémentés dans le service Web sur base DPWS sous la forme de services d'agent,
**caractérisé en ce**
**que** les appareils (ST, MA, WP) fournissant les services de production et de commande communiquent par le biais d'une unique plateforme de communication fournie par l'unité de coordination, que la plateforme de communication (SKP) est mise en oeuvre sous la forme d'une plateforme uniforme orientée DPWS (Device Profile for Web-Services) avec une architecture orientée services, que dans l'unité de coordination (CO) sont implémentés une configuration (topologie) du système de production flexible (PS) ainsi que l'état de la production au moment de l'exécution, et que par le biais d'une interface de support implémentée dans l'unité de coordination (CO), est réalisé un couplage d'un système d'agents soutenant la sélection de services et l'acheminement optimal de produits.

7. Procédé selon la revendication 6,
**caractérisé en ce**
**que** la modélisation du système de productions et la coordination s'effectuent sur la base de langages de modélisation appropriés, tels que par exemple BPEL4WS, dérivés de PN, dérivés de SFC ou organigrammes.
